(19) **Europäisches Patentamt / European Patent Office / Office européen des brevets**

(11) **EP 2 235 679 B1**

(12) # FASCICULE DE BREVET EUROPEEN

(45) Date de publication et mention de la délivrance du brevet:
**15.02.2012 Bulletin 2012/07**

(21) Numéro de dépôt: **08861835.0**

(22) Date de dépôt: **16.12.2008**

(51) Int Cl.:
**G06T 7/00** (2006.01)

(86) Numéro de dépôt international:
**PCT/EP2008/067654**

(87) Numéro de publication internationale:
**WO 2009/077539 (25.06.2009 Gazette 2009/26)**

(54) **METHODE DE TRAITEMENT D'UNE IMAGE TRI DIMENSIONNELLE DE LA SURFACE D'UN PNEUMATIQUE EN VUE DE SON UTILISATION POUR L'INSPECTION DE LADITE SURFACE**

VERFAHREN ZUR VERARBEITUNG EINES DREIDIMENSIONALEN BILDES EINER REIFENFLÄCHE FÜR SEINE VERWENDUNG ZUR ÜBERPRÜFUNG DIESER FLÄCHE

METHOD FOR PROCESSING A THREE-DIMENSIONAL IMAGE OF THE SURFACE OF A TYRE SO THAT IT CAN BE USED TO INSPECT THE SAID SURFACE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.12.2007 FR 0760042**

(43) Date de publication de la demande:
**06.10.2010 Bulletin 2010/40**

(73) Titulaires:
- **Société de Technologie MICHELIN**
  **63000 Clermont-Ferrand (FR)**
- **MICHELIN Recherche et Technique S.A.**
  **1763 Granges-Paccot (CH)**

(72) Inventeurs:
- **JOLY, Alexandre**
  **F-63800 Cournon d'Auvergne (FR)**
- **LEOBAL, Christian**
  **F-63960 Veyre-Monton (FR)**
- **MOREAU, Claire**
  **F-63360 Gerzat (FR)**
- **GASPARD, François**
  **F-91040 Les Ulis (FR)**
- **VINCIGUERRA, Régis**
  **F-91700 Villiers sur Orge (FR)**

- **BOURGEOIS, Steve**
  **F-94600 Choisy le Roy (FR)**

(74) Mandataire: **Reynaud, Georges et al**
**Manufacture Française**
**des Pneumatiques Michelin**
**23, place des Carmes-Dechaux**
**SGD/LG/PI-F35-Ladoux**
**63040 Clermont-Ferrand Cedex 9 (FR)**

(56) Documents cités:
**EP-A- 1 477 765     EP-A- 1 750 089**
**US-A- 5 715 166**

- **LI Y ET AL: "Free-form surface inspection techniques state of the art review" COMPUTER AIDED DESIGN, ELSEVIER PUBLISHERS BV., BARKING, GB, vol. 36, no. 13, 1 novembre 2004 (2004-11-01), pages 1395-1417, XP004534040 ISSN: 0010-4485**
- **WOLBERG G ET AL: "Robust image registration using log-polar transform" IMAGE PROCESSING, 2000. PROCEEDINGS. 2000 INTERNATIONAL CONFERENCE ON SEPTEMBER 10-13, 2000, PISCATAWAY, NJ, USA,IEEE, vol. 1, 10 septembre 2000 (2000-09-10), pages 493-496, XP010530659 ISBN: 978-0-7803-6297-0**

## Description

L'invention concerne le domaine de la fabrication des pneumatiques. Plus particulièrement, la présente invention s'intéresse au problème de l'inspection visuelle des pneumatiques en cours ou en fin du processus de production, dans le but d'en déterminer la conformité par rapport à des références de contrôle établies en vue de l'usage qui sera fait dudit pneumatique.

L'accroissement, à coût constant, de la puissance de calcul par ordinateur, autorise désormais le développement à l'échelle industrielle de moyens de contrôle automatiques destinés à assister les opérateurs chargés du contrôle visuel des pneumatiques. Ces moyens font largement appel à des techniques de traitement d'image dont la performance, en terme de rapidité d'analyse et de définition, dépend largement de la puissance de calcul utilisée.

Les méthodes employées pour effectuer ces traitements consistent, en règle générale, à comparer une image en deux ou préférentiellement en trois dimensions de la surface du pneumatique à inspecter avec une image de référence en deux et préférentiellement en trois dimensions de la surface dudit pneumatique. A cet effet, on cherche à faire correspondre, l'image ou la surface du pneumatique à inspecter et l'image ou la surface de référence, par exemple en les superposant, et on détermine les anomalies de fabrication par l'analyse des différences entre les deux images ou les deux surfaces.

Une méthode de ce type est décrite à titre d'exemple dans la publication US 5 715 166 qui décrit les transformations à réaliser pour mettre en correspondance une surface de référence avec une image tridimensionnelle d'un objet donné, en utilisant des fonctions de transformation telles que des rotations ou des glissements. Cette méthode s'applique avec de bons résultats lorsque l'on cherche à faire correspondre des objets solides non déformables tels que des pièces métalliques considérées ici comme infiniment rigides.

Dans le cas du pneumatique, l'image de référence de la surface peut être obtenue à partir des données numériques provenant de la conception du pneumatique ou, plus communément, des données numériques servant à décrire et à fabriquer le moule de cuisson, ledit moule étant lui-même destiné à donner sa forme définitive audit pneumatique.

L'image tridimensionnelle de la surface du pneumatique peut etre obtenue, de manière connue, à l'aide d'une caméra apte à déterminer le relief en trois dimensions de la surface du pneumatique.

Toutefois, on observe que le pneumatique sorti du moule ne correspond pas exactement à l'image en négatif du moule dans lequel s'est déroulée l'opération de moulage et de vulcanisation, en raison de la nature élastique des matériaux qui le composent.

En effet, le pneumatique se déforme dés sa sortie de la presse de vulcanisation en raison des rétractations thermiques des matériaux lors du refroidissement.

De plus, lors du montage et du gonflage, les nappes de renfort prennent leur position définitive et la courbe d'équilibre du pneumatique gonflé ne correspond pas nécessairement à la forme du pneumatique donnée par le moule de cuisson.

Aussi, il s'avère nécessaire de procéder à un ajustement préalable de l'image de la surface de référence et de l'image acquise de la surface du pneumatique à inspecter, afin de mettre en correspondance les deux surfaces dans le but d'en tirer des informations pertinentes sur la conformité du pneumatique provenant de la fabrication.

Une méthode de ce type est décrite, à titre d'exemple, dans la publication EP 1 750 089. Selon cette publication, la représentation en trois dimensions de la surface du pneumatique à inspecter et la représentation en trois dimensions de la référence lui correspondant, sont découpées en portions de surface de dimensions réduites, correspondant sensiblement à la surface d'un élément de marquage tel qu'une lettre ou un ensemble de lettres. Toujours selon la méthode en question, les algorithmes de calcul sont adaptés pour faire glisser l'une sur l'autre les portions de surface de la surface de référence et de la surface à inspecter, de manière à déterminer l'optimum de correspondance entre les contours des reliefs des deux surfaces. Une fois ce recalage local réalisé, et pour la portion de la surface en question, les deux portions de surfaces sont comparées l'une à l'autre pour déterminer le degré de conformité du pneumatique à inspecter par rapport à une référence.

Si les algorithmes décrits dans cette publication présentent l'avantage de s'affranchir dans une large mesure des écarts de position entre le modèle et le pneumatique réel décrits ci-dessus, ainsi que des différences de montage et de gonflage d'une enveloppe à une autre, ils sont proches de ceux décrits dans la publication US 5 715 166, en ce qu'ils assimilent les portions de surface à des éléments rigides.

On observe néanmoins un manque de robustesse dans la mise en oeuvre de cette méthode, en particulier, lorsque la surface du pneumatique à inspecter présente des anomalies importantes telles qu'une absence totale d'un élément de marquage, ou la présence d'un élément étranger au niveau du marquage en relief, lesquelles anomalies ont pour effet de perturber l'algorithme de mise en correspondance de l'image acquise et de l'image de référence dans cette portion de surface. De plus, cette méthode donne de mauvais résultats dans les surfaces lisses ne comportant pas de marquage et qui peuvent comporter, elles aussi, des anomalies de moulage.

L'invention a pour objet d'apporter une solution à ces problèmes.

La méthode d'inspection selon l'invention concerne les parties de la surface d'un pneumatique comprenant des marquages en relief. On entend par marquage en reliefs les éléments tels que des chiffres ou des caractères alphanumériques, des suites de caractères formant des mots ou des nombres, des caractères figuratifs tels que des idéogrammes, des motifs décoratifs ou des dessins, des stries, et situés sur le flanc ou sur la surface intérieure, ou encore des motifs de sculpture de la bande de roulement

La méthode d'inspection selon l'invention comprend les étapes au cours desquelles :

- on détermine le profil tridimensionnel de la surface à inspecter,
- on localise des points caractéristiques de la surface à inspecter et on apparie ces points avec les points caractéristiques correspondants issus des données tridimensionnelles d'une surface de référence, de manière à créer un ensemble de couples de points caractéristiques appariés,
- on recherche, de manière itérative, une première fonction de transformation appliquée sur les points caractéristiques de la surface de référence, de telle sorte que la valeur représentant la somme des distances entre chacun des points caractéristiques de la surface de référence, transformés à l'aide de ladite première fonction de transformation, et les points de la surface à inspecter qui leur sont appariés, soit minimale,
- on applique ladite première fonction de transformation à l'ensemble des points de la surface de référence pour obtenir une surface de référence transformée.

  Cette méthode se caractérise en ce que ladite fonction de transformation est une fonction affine comprenant une homothétie dont le rapport a une valeur absolue différente de 1.

De cette manière, il est possible de transformer en la déformant la surface de référence de manière à recaler l'ensemble des points de la surface de référence par rapport à la surface à inspecter pour s'affranchir des variations globales de forme entre la surface de référence et la surface à inspecter. Cette transformation affine se distingue des transformations dans laquelle les homothéties ont un rapport égal à 1 et qui se réduisent alors à de simples rotations ou translations.

Tous les points de la surface de référence sont pris en compte et transformés par ladite première fonction de transformation, ce qui permet de mettre en correspondance les surfaces comportant des marquages en relief de la même manière que les surfaces lisses ou ne comportant pas de marquage du fait d'une anomalie.

L'invention prévoit également de déterminer des secondes fonctions de transformations du type transformations affines comprenant une homothétie de rapport différent de 1, sur des portions de surface de manière à affiner le recalage initial de la surface de référence.

Comme on le verra par la suite, la qualité de ces recalages dépend largement de la détermination des points caractéristiques, mais également du domaine d'application de la fonction de transformation. En effet, il convient de s'affranchir de l'influence des déformations locales généralement causées par des anomalies de réalisation que l'on cherche à détecter. Cette distorsion est évitée en appliquant ladite première ou lesdites secondes transformations, à des surfaces considérées comme homogènes, c'est a dire subissant sensiblement le même niveau de transformation élastique.

Le temps de calcul reste également un facteur limitatif déterminant. Aussi, la mise en oeuvre de l'invention est facilitée par l'exécution préalable d'étapes de simplification complémentaires qui ont pour but d'alléger ces temps de calcul, sans altérer la qualité du résultat recherché.

La description qui suit, permet d'illustrer un mode particulier de mise en oeuvre de l'invention et s'appuie sur les figures 1 à 16 dans lesquelles :

- la figure 1 représente une image 2D des contours des éléments en relief d'une surface de référence et de l'image déroulée de ladite image,
- la figure 2 représente une illustration de la détermination du profil radial moyen de la surface,
- les figures 3, 4, 5 illustrent les étapes de squelettisation des caractères alphanumériques,
- les figures 6 et 7 illustrent des choix possibles de points caractéristiques,
- les figures 8 et 9 illustrent l'étape de recalage des azimuts,
- la figure 10 illustre la variation angulaire entre le profil radial moyen de la surface de référence et le profil radial moyen de la surface à inspecter,
- la figure 11 illustre le recalage du profil radial moyen de la surface de référence par rapport au profil radial moyen de la surface à inspecter,
- la figure 12 illustre l'appariement de points caractéristiques entre la surface de référence et la surface à inspecter.
- la figure 13 illustre le recalage de l'image de la surface de référence par rapport à l'image de la surface à inspecter, après application de la première fonction de transformation,
- les figures 14, 15 et 16 illustrent le recalage de l'image de la surface de référence par rapport à l'image de la surface à inspecter, après application de la première et de la deuxième fonction de transformation.

La première étape du procédé consiste, de manière connue, à obtenir les données permettant de caractériser la surface en trois dimensions de la surface à inspecter. Pour réaliser cette opération, on éclaire la surface à l'aide d'une lumière blanche ou d'une lumière de longueur d'onde donnée, telle que la lumière provenant d'un faisceau laser, et on capte la lumière réfléchie par la surface à l'aide d'une caméra matricielle dont on analyse les colonnes. Il est aussi possible d'utiliser un capteur tridimensionnel à triangulation laser dont les principes sont assimilables, en deux dimensions, à ceux d'une caméra linéaire.

Le pneumatique à inspecter est installé sur un moyen permettant de le mettre en rotation relative par rapport à la caméra. En faisant opérer au pneumatique un tour complet autour de son axe de rotation par rapport à la caméra, on obtient les données numériques qui, après traitement par un moyen de calcul approprié et connu, sont représentatives des coordonnées tridimensionnelles de la surface à inspecter. La surface est alors matérialisée par un ensemble de points dans un espace à trois dimensions.

Il est recommandé de faire l'acquisition des données tridimensionnelles de la surface à inspecter après avoir monté le pneumatique sur une jante et après avoir gonflé le pneumatique à une pression de référence, de manière à rapprocher le pneumatique de sa courbe d'équilibre, et à minimiser les variations de positionnement de la surface entre deux pneumatique différents. Ceci permet également de mettre en évidence des anomalies de structure qui pourront être détectées par la méthode faisant l'objet de la présente invention.

L'exemple de mise en oeuvre de l'invention décrit ci-après s'adresse plus particulièrement à l'inspection des flancs du pneumatique, qui sont généralement chargés en marquages et en motifs graphiques de tout genre. Toutefois, les techniques mises en oeuvre peuvent, moyennant transposition, être utilisées de manière identique pour l'inspection de la partie intérieure ou de la bande de roulement.

La surface servant de référence peut provenir des données de conception du pneumatique en trois dimensions ou, préférentiellement, des données de conception et de réalisation du moule de cuisson et plus spécifiquement des données de creusage des coquilles servant à mouler les flancs et portant les marquages en creux. En effet, la connaissance des paramètres de commande de l'outil de fraisage, adossée à la connaissance du profil radial moyen de la coquille, permet de reconstruire une surface en relief assimilée à la surface de référence.

La surface de référence reconstruite de cette manière se présente sous la forme d'un ensemble de points inscrits sur la surface de référence. Il est également possible d'associer à ces points des informations supplémentaires significatives de la nature de la surface où ils se situent, telles que l'indication que ce point se situe sur une surface lisse, un relief, un caractère ou un ensemble de caractères alphanumériques, un motif particulier, tels qu'un motif strié ou lisse. Ces indications s'avèrent en effet utiles dans les étapes ultérieures de mise en oeuvre de la méthode, en particulier lorsque l'on cherchera à déterminer lesdits points caractéristiques.

Comme cela a été évoqué précédemment, il est intéressant d'alléger les calculs à effectuer en réalisant quelques étapes préalables de simplification. Un des moyens pour y parvenir, consiste à choisir convenablement les repères dans lesquels on exprimera les coordonnées tridimensionnelles des points de la surface de référence et de la surface à inspecter, de manière à autoriser des projections simples permettant de réduire le nombre de coordonnées, et le nombre de dimensions de l'espace à étudier.

Aussi, on s'arrange pour que les coordonnées en trois dimensions x, y, z des surfaces à analyser soient exprimées dans un repère orthonormé OX, OY, OZ dans lequel l'axe OZ est sensiblement confondu avec l'axe de rotation du pneumatique. Il est alors aisé de convertir les coordonnées x, y, z par projection dans le plan OXY et de changer les coordonnées cartésiennes x, y dans le plan OXY en coordonnées polaires de type p, θ.

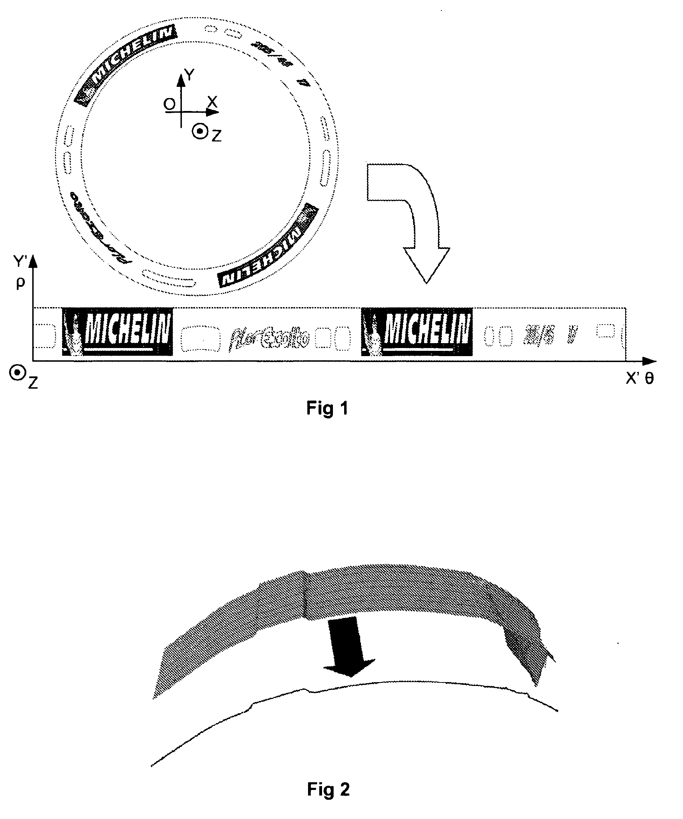

Une première simplification consiste à dérouler la surface comme cela est illustré à la figure 1. Il suffit pour cela de considérer que la valeur de p correspond à la valeur selon un axe OY' et que la valeur θ correspond à la coordonnée selon l'axe OX'. Le repère OX'Y' étant lui-même un repère orthonormé.

Une seconde simplification consiste à déterminer le profil moyen du galbe de la surface dans un plan radial. Pour ce faire, il suffit de projeter l'ensemble des points dans le plan formé par les axes OZ et OX', comme cela est illustré à la figure 2, ce qui correspond à une projection dans un plan radial. La forme du profil radial moyen sera donnée par la forme du nuage de points dans ce plan radial, dont on peut extraire une courbe moyenne en faisant la moyenne des valeurs selon une direction OZ. La surface obtenue en déployant à nouveau ce profil radial moyen correspond sensiblement à la surface du pneumatique sur laquelle ne figurerait aucun marquage en relief.

Il suffit alors, pour chaque valeur de l'angle θ, de soustraire la valeur de ce profil radial moyen des coordonnées exprimées dans le plan OX'Z pour obtenir une mise à plat de la surface déroulée déterminée ci-dessus, et dans laquelle, seuls les éléments en relief ont une valeur selon l'axe OZ.

La mise à plat peut également se faire en suivant le profil de la surface selon un tracé déterminé, par exemple une ligne dans laquelle la valeur de p est constante, et en détectant les variations localisées du profil, significatives des marquages en relief réalisés sur ladite surface. La juxtaposition de ces lignes donne également une surface mise à plat sur laquelle, seuls les éléments en relief apparaissent.

De manière équivalente il est aussi possible de projeter la surface déroulée dans le plan OXY.

En affectant une valeur de niveau de gris à la valeur selon l'axe OZ, on obtient une image en deux dimensions de la surface, sur laquelle les éléments en relief se détachent visuellement par rapport à la couleur de la surface moyenne.

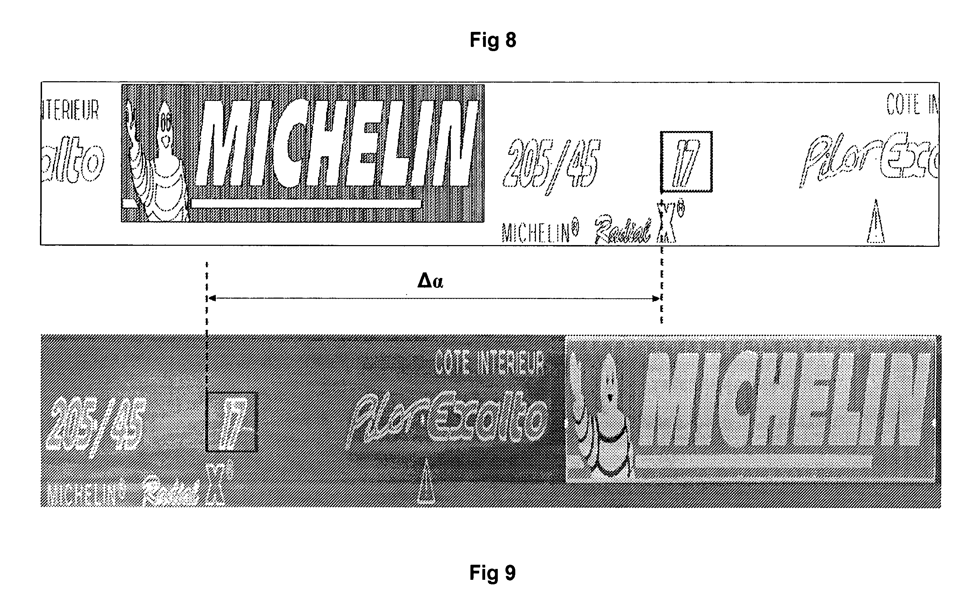

Cette dernière simplification peut se faire avec un résultat similaire sur la surface mise à plat selon l'une des méthodes explicitée ci-dessus. La figure 8 illustre le résultat de ces simplifications appliquées à la surface de référence qui a été déroulée, mise à plat et convertie en une image en niveau de gris. La figure 9, quant à elle, représente l'image déroulée et mise à plat de la surface à inspecter.

La recherche des points caractéristiques s'effectue par une méthode classique de reconnaissance optique de caractère plus connue sous l'acronyme anglo-saxon OCR (Optical Character Recognition). Selon ce type de méthode, une première étape consiste à segmenter la surface pour obtenir une image en noir et blanc de la surface dans un plan, en s'arrangeant pour que ladite image soit suffisamment contrastée de sorte que les caractères alphanumériques ou les motifs soient facilement identifiables.

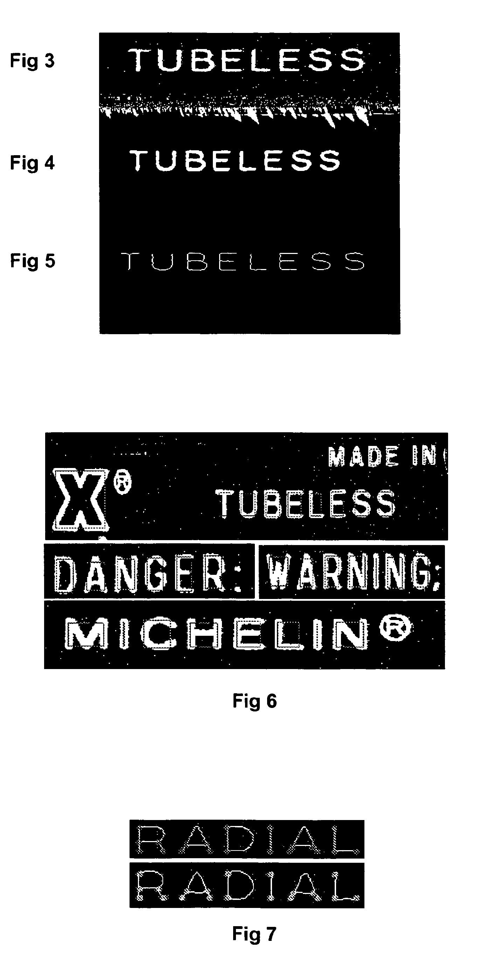

La méthode la plus simple pour réaliser cette segmentation, et dont les étapes sont illustrées par les figures 3, 4 et 5, consiste à utiliser la surface déroulée et mise à plat selon la méthode exposée ci-dessus et d'affecter une couleur noire ou blanche aux éléments en relief. Un filtrage permet d'éliminer les taches indésirables (figure 3). Les caractères alphanumériques ou les motifs sont ensuite convertis en lignes ou en courbes (figure 4), par une méthode connue, telle que la méthode décrite par Ben K. Jang & Roland T. Chin dans l'article « One-Pass Parallel Thinning ; Analysis, Properties and Quantitative Evaluation », PAMI Volume 14, N°11, de Novembre 1992, de manière à ne conserver que le squelette du caractère ou du motif.

Une fois cette opération achevée, on peut alors appliquer une des méthodes connue de reconnaissance optique des caractères, dans le but d'identifier et de localiser les caractères alphanumériques et les textes associés, présents sur la surface.

Afin de simplifier la mise en oeuvre de la méthode et d'augmenter la rapidité de réalisation des calculs, il est suggéré de procéder au recalage de l'image de la surface de référence par rapport à l'image de la surface à inspecter. A cet effet, on prédétermine une collection de caractères alphanumériques ou de motifs qui ne sont présents qu'une seule fois sur la surface, comme cela est illustré sur les figures 8 et 9. Dés que ces caractères ont été localisés dans les deux images, on évalue l'écart angulaire $\Delta\alpha$ entre ces deux caractères, et on effectue un changement de coordonnées sur l'axe OX' (représentant les valeur angulaire $\theta$), en faisant passer l'origine des valeurs angulaires par ces caractères. Le recalage des azimut autorise une comparaison directe des points de même coordonnées dans le plan OX'Y'.

Le recalage en azimut peut être suivi d'un recalage selon la direction radiale OY' (représentant la valeur de p), de manière à améliorer la recherche et la localisation des marquages sur le reste de la surface.

Une fois la plupart des caractères alphanumériques, des textes et des motifs localisés sur l'image de la surface de référence et sur l'image de la surface à inspecter, on procède à une mise en correspondance des caractères alphanumériques qui sont associés à des textes, et des motifs présents sur les deux surfaces.

La robustesse de cette étape d'association est améliorée en utilisant les informations provenant de l'étape de recalage des azimuts effectuée précédemment, lesquelles permettent d'identifier plus précisément les aires de recherche des mots ou des motifs à associer. La taille des caractères peut également servir pour réduire les erreurs d'association.

Ainsi, le mot « RADIAL » situé prés du bourrelet sur l'image de référence est associé au mot « RADIAL » situé dans la même région de l'image à inspecter.

On détermine alors sur chaque caractère ou sur chaque motifs les points formés par l'intersection des branches des tracés du squelette ou encore les points terminaux des dites branches. Ces points forment des points caractéristiques dont la localisation est précise comme cela est illustré à la figure 7. De manière non limitative, il est également possible de choisir comme point caractéristique les sommets d'un quadrilatère enveloppant le caractère alphanumérique ou du motif comme cela est illustré à la figure 6, ou encore un barycentre des lignes ou du relief considéré, comme par exemple un centre de gravité. Ce qui importe, c'est que les coordonnées de ces points soient connues de manière précise et puissent être localisées sans risque de confusion sur la surface à inspecter et sur la surface de référence.

Les points caractéristiques de l'image de la surface de référence et de l'image de la surface à inspecter correspondant, sont alors associés deux à deux pour former des couples de points caractéristiques appariés.

A titre d'exemple, le point caractéristique associé à la pointe supérieure du premier A de « RADIAL » de l'image de référence est associé au point caractéristique du premier A de « RADIAL » de l'image à inspecter. Ce couple de points constitue un couple de points caractéristiques appariés.

Le nombre de points caractéristiques appariés est variable d'une dimension à une autre, et peut également évoluer entre deux analyses successives d'un même pneumatique en fonction des éventuelles anomalies pouvant se trouver sur les marquages en relief, mais également, en raison des rejets successifs pouvant être opérés à chacune des étapes de la mise en oeuvre de la méthode de reconnaissance optique des caractères laquelle génère ses propres anomalies lorsque les critères de reconnaissance ne sont pas tous remplis.

De manière idéale, les paires de points caractéristiques sont réparties sur l'ensemble de la surface à inspecter. En fait, on observe que ces points sont préférentiellement situés dans l'aire placée à proximité du bourrelet, en raison du grand nombre de marquages et de textes situés dans cette partie du pneumatique. Cette localisation préférentielle peut s'avérer gênante par la suite, et il sera nécessaire d'envisager des moyens correctifs.

La méthode selon l'invention prévoit une simplification supplémentaire, préalable à la détermination de la première fonction de transformation, qui consiste à opérer une translation et une rotation de la surface du de référence dans un plan radial. Il a été mis en évidence que, lors du gonflage du pneumatique et/ou de la mise en place du bourrelet sur la jante ou sur le système de mise en rotation de l'enveloppe, la courbe d'équilibre du flanc bascule par rapport à la forme du flanc imposée par la géométrie du moule.

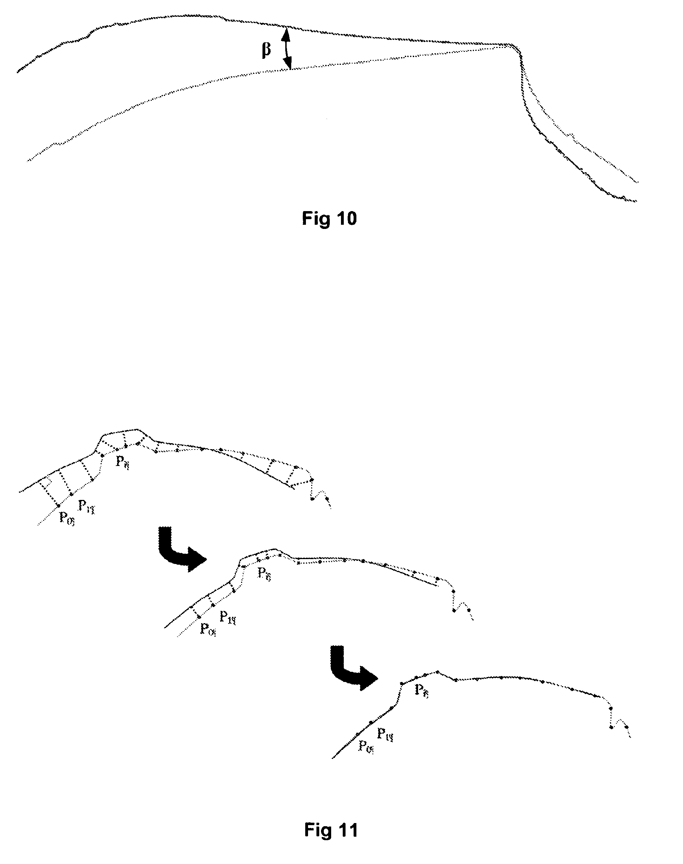

Ce mouvement physique peut être mesuré en comparant les profils radiaux moyens de la surface de référence et de la surface à inspecter comme cela est illustré à la figure 10.

On recherche alors la rotation et la translation permettant de faire coïncider au mieux les courbes des deux profils radiaux moyens sans les déformer. A titre d'exemple un algorithme de type ICP (Iterative Closest Point) permet de déterminer la rotation et la translation à réaliser qui minimise la distance orthogonale (au sens des moindres carrés) entre des points du profil radial moyen de la surface de référence et leur projection orthogonale sur le profil radial moyen de la surface à inspecter comme cela est illustré à la figure 11. Les points retenus pour effectuer ces calculs seront utilement choisis parmi les points caractéristiques.

On applique alors cette rotation et cette translation dans le plan radial à l'ensemble des points de la surface de référence.

L'étape suivante consiste à rechercher la première fonction de transformation. L'ensemble des points de départ sur lequel on va appliquer cette première fonction de transformation est constitué par les points caractéristiques de la surface de référence et l'ensemble d'arrivée, représente l'ensemble des points transformés, à chacun desquels il est possible d'associer une grandeur représentative de la distance le séparant du point de la surface à inspecter auquel ils est apparié.

On recherche alors, par itérations successives, une première fonction de transformation qui minimise la somme de ces grandeurs.

Cette première fonction de transformation pourrait être une fonction non linéaire. Dans ce cas, on observe que la détermination de ladite fonction passe par le choix préalable de la structure générale des équations mises en oeuvre.

Toutefois, la détermination des paramètres fait intervenir un grand nombre de paires de points caractéristiques, et le calcul de ces paramètres peut s'avérer complexe. Bien qu'il en résulte une assez bonne mise en correspondance des paires de points caractéristiques, le choix d'une fonction non linéaire s'avère peu robuste, car très sensible aux variations de positionnement des points caractéristiques de la surface à évaluer, et aux erreurs d'appariement pouvant survenir à l'étape précédente. De plus, ce type de transformation autorise des déformations de toute nature dont il est difficile de limiter les amplitudes.

Aussi, selon un mode préférentiel de mise en oeuvre de l'invention la première fonction de transformation est une fonction affine qui est composée par la combinaison d'une rotation, d'un déplacement et d'une déformation ou d'une homothétie dont le rapport a une valeur absolue différente de 1 selon une direction donnée, ainsi que d'une mise à l'échelle selon chacun des axes de coordonnées. Le centre de l'homothétie est constitué en règle générale par un point de l'axe de rotation du pneumatique.

Ces fonctions affines présentent l'intérêt de conserver les caractéristiques géométriques des surfaces telles que le parallélisme, le milieu, les rapports de distance et les barycentres. Il en résulte que la détermination des paramètres est plus facile à réaliser, et requière des temps de calcul moins importants.

Par ailleurs, la recherche de la première fonction de transformation affine est grandement simplifiée, lorsqu'elle s'effectue sur les images de la surface de référence et de la surface à inspecter en deux dimensions. Ce qui est l'objet des étapes de simplification explicitées ci-dessus au cours desquelles, chacune des surfaces est successivement déroulée, mise à plat, dans lesquelles la valeur du relief a été transformée en niveau de gris ou de couleur, et sur lesquelles est appliquée la rotation et la translation dans le plan radial.

Les coordonnées images ou objet (x', y', 1) d'un point (x, y, 1) de l'image de référence ainsi simplifiée s'obtiennent à partir de la transformation qui s'exprime sous la forme vectorielle suivante :

$$\mathbf{x'} = \mathbf{H}_{Affine}\,\mathbf{x}$$

$$\begin{pmatrix} x' \\ y' \\ 1 \end{pmatrix} = \begin{bmatrix} a_{11} & a_{12} & t_x \\ a_{21} & a_{22} & t_y \\ 0 & 0 & 1 \end{bmatrix} \begin{pmatrix} x \\ y \\ 1 \end{pmatrix}$$

et qui peut se réécrire sous la forme suivante :

$$p' = H_A\,p = \begin{bmatrix} A & t \\ 0^T & 1 \end{bmatrix} p$$

où t représente une translation dans le plan et A une matrice affine 2x2 qui peut s'écrire sous la forme d'une rotation dans le plan, et d'un étirement, ou déformation, non isotrope selon deux axes perpendiculaires faisant un angle donné par rapport aux axes du repère orthonormé.

En première approche on observe toutefois que la recherche de cette première fonction de transformation appliquée à l'ensemble de la surface reste pertinente en ce que les déformations constatées s'opèrent essentiellement dans la direction radiale et sont relativement homogènes sur toute la circonférence du pneumatique. Ainsi les effets d'éventuelles déformations locales dues à des anomalies restent mineurs.

Comme cela a été évoqué ci-dessus, la recherche des paramètres décrivant la première fonction de transformation est très sensible aux erreurs d'appariement. Aussi, on utilisera un algorithme de recherche permettant à chacune des boucles d'optimisation de conserver les données « pertinentes » et d'éliminer les données jugées « aberrantes ». A titre d'exemple, l'algorithme de la moindre médiane des carrés tels que la fonction Lmeds décrite par Peter J. Rousseewn & Annick M. Leroy dans l'article « Robust regression and outliers detection», John Wiley and Sons, Inc ISBN 0-471-85233-3, New York, 1987, donne de bons résultats. Cet algorithme consiste à effectuer des tirages aléatoires parmi les couples de points caractéristiques appariés et à estimer la transformation de ces points. Les points obtenus sont alors classés selon les critères de pertinence retenus à la suite d'une analyse statistique sur les erreurs résiduelles. Cette méthode permet de déterminer les paramètres de la première fonction de transformation lorsque les données contiennent jusqu'à 50% de données jugées aberrantes.

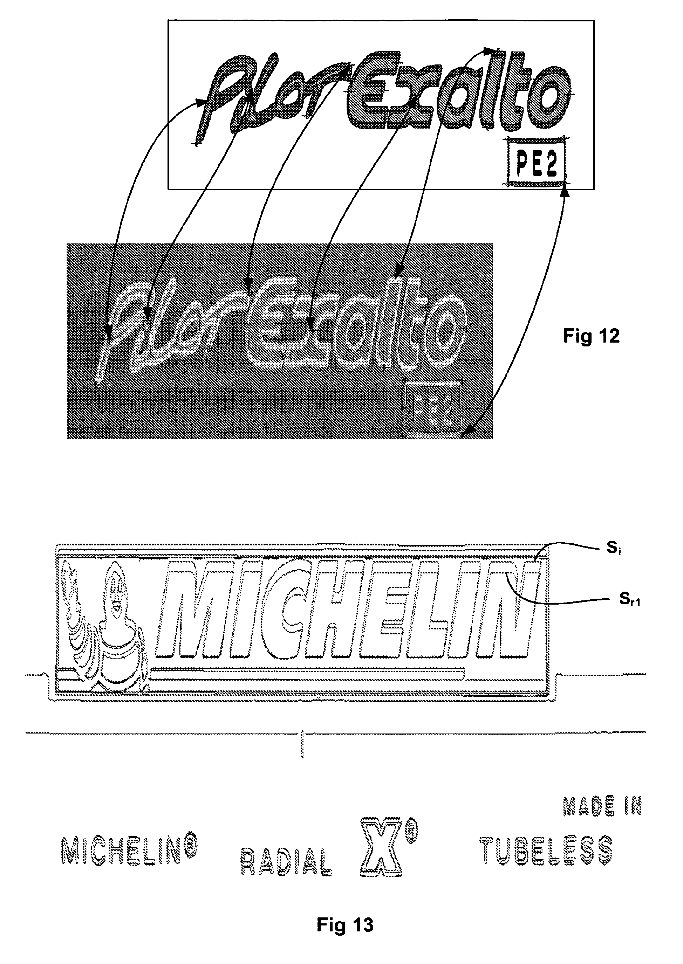

En raison des simplifications proposées dans les étapes précédentes, le nombre de paramètres nécessaires pour décrire la première fonction de transformation affine est faible, et le nombre de couples de points caractéristiques appariés nécessaires pour estimer linéairement ces paramètres peut être réduit à un minimum de six, comme cela est illustré à la figure 12.

On observe, à ce stade de la mise en oeuvre de la méthode selon l'invention, que la recherche de cette première fonction de transformation peut se faire indépendamment des simplifications et des changements de repères décrits ci-dessus. On observe également que les étapes de mise à plat, de rotation et de translation sont elles-mêmes des transformations affines qui, en se combinant avec une première transformation affine donnent également une transformation affine.

Une fois la première fonction de transformation déterminée on applique cette fonction à l'ensemble des points de la surface de référence. Ceci permet d'obtenir une surface de référence transformée et recalée par rapport à la surface à inspecter et dont tout les points, qu'ils appartiennent à un élément de surface lisse ou à un élément en relief sont recalés.

On choisit ici de transformer la surface de référence et non pas la surface à inspecter. Comme on le verra par la suite, ce choix délibéré permet de se doter d'un moyen d'analyse supplémentaire dans la recherche des anomalies susceptibles de se trouver sur la surface à inspecter.

La figure 13 illustre la superposition de l'image de la surface à inspecter $S_i$ et de l'image de la surface de référence transformée à l'aide de la première fonction de transformation $S_{r1}$ On remarquera que le recalage est très précis dans l'aire placée à proximité du bourrelet, dans laquelle les deux images se superposent presque parfaitement. En revanche, le recalage des parties du flanc, situées à proximité de l'épaule du pneumatique, est moins précis. Ceci est du en grande partie au plus faible nombre de points caractéristiques dans cette zone comme cela a été évoqué plus haut.

Un premier perfectionnement de l'invention consiste donc à corriger, si nécessaire, ces erreurs résiduelles en procédant à une deuxième étape de recalage au cours de laquelle on va rechercher des deuxièmes fonctions de transformations, dont l'application locale aura pour effet de recaler localement la surface de référence.

Une première méthode consiste tout simplement à constituer des sous ensemble de points caractéristiques appariés appartenant à une même zone ou portion de la surface de référence et de la surface à inspecter. Ces sous ensembles doivent comporter un minimum de six paires de points caractéristiques appariés.

On recherche alors, pour chacune des zones ou portions de surface considérées, et selon la même méthodologie que celle qui a été utilisée pour la détermination de la première fonction de transformation, des secondes fonctions de transformations affines comportant une homothétie dont la valeur absolue du rapport est différente de 1.

Chacune des secondes fonctions de transformation, de la même manière que cela a été développé ci-dessus, minimise, dans la zone considérée, la valeur représentant la somme des distances entre chacun des points caractéristiques de la surface de référence transformés successivement à l'aide de la première et de la seconde fonction de transformation et le point de la surface à inspecter qui leurs sont appariés.

Il importe là encore de définir des portions de surface suffisamment homogènes et dont la superficie soit adaptée de manière à réduire les effets des anomalies de la surface à inspecter. En pratique, on découpera la surface de référence en portions ou en zones comprenant un ou plusieurs caractères ou dessin distinctif préalablement identifiés.

A titre d'illustration, le découpage en zones peut se faire en découpant la surface en secteurs angulaires (entre quatre et douze) et en secteurs radiaux (entre deux et trois) pour autant que le nombre de point caractéristiques appariés à l'intérieur de chaque zone soit supérieur à six. On obtient autant de secondes fonctions de transformation que de zones.

On applique alors cette seconde transformation affine à l'ensemble des points de ladite zone après leur avoir appliqué la première fonction de transformation. Alternativement on combine la première et la seconde transformation et on applique cette nouvelle transformation à la zone considérée.

Le processus décrit ci-dessus peut évidemment se répéter de manière itérative sur des zones de plus en plus petites, pour autant qu'elles contiennent un nombre de points caractéristiques appariés minimum. Dans ces conditions on combine une première fonction de transformation applicable à l'ensemble des points de la surface, avec une seconde fonction de transformation applicable à l'ensemble des points d'une zone donnée, avec une troisième fonction de transformation établie pour une sous zone de la zone considérée à la manière de systèmes emboîtés les uns dans les autres.

On observera alors que, en choisissant des portions de surface dont la superficie est de plus en plus réduite, il devient difficile de minimiser les effets des anomalies de surface de la surface à inspecter. La fonction de transformation aura alors tendance à déformer la portion de surface de référence de manière à l'adapter aux anomalies de la surface à inspecter. C'est pourquoi, en pratique, on limite à deux le nombre de découpages en zones ou portions de surface ce qui revient à calculer des premières des deuxièmes et au plus des troisièmes niveaux de transformations affines en réalisant les découpages appropriés.

Un découpage fin, ne permet pas d'éviter les écueils signalés ci-dessus et liés à l'utilisation des homothéties. Cet inconvénient peut toutefois se retourner en avantage en ce qu'il est alors possible de calculer une valeur, ou norme, représentant la déformation moyenne de la portion de surface de référence par rapport à la surface de référence d'origine. L'écart de cette valeur par rapport à une valeur moyenne établie en calculant la moyenne des déformations de la surface de référence permet de détecter les zones ou portion de surface présentant potentiellement une anomalie sur la surface à inspecter.

Cette méthode présente un intérêt en ce qu'on peut choisir les zones sur lesquelles il s'avère utile de rechercher une seconde fonction de transformation, voire dans des cas exceptionnels, une troisième fonction de transformation, en particulier les zones situées dans les parties radialement extérieures du flanc, que l'on distinguera des zones dans lesquelles cette recherche n'est pas nécessaire, ce qui est le cas des zones proches du bourrelet du pneumatique, et où l'application de la seule première fonction de transformation est suffisante.

Une seconde méthode consiste à s'intéresser de manière préférentielle aux contours des éléments en relief situés sur l'image de référence et sur l'image à inspecter. Ces contours sont obtenus à partir des données tridimensionnelles en utilisant, par exemple, les images des surfaces déroulées et mises à plat de la surface de référence transformée à l'aide de la première fonction de transformation, et de la surface à inspecter. En effet, cette seconde méthode ne s'applique de manière efficace que sur les données en deux dimensions de l'image de la surface de référence et de la surface à inspecter.

On détermine alors des surfaces élémentaires qui vont contenir une ou plusieurs parties du contour d'un ou plusieurs objets en relief, et dont le contour présentera une variation du niveau de gris ou de couleur, tels qu'un caractère alphanumérique seul, ou une partie de motif et une partie de caractère alphanumérique, plusieurs caractères alphanumériques, ou encore un motif décoratif particulier.

De même, il peut s'avérer intéressant, comme cela a été évoqué ci-dessus, de se limiter aux seules surfaces élémentaires situées dans la zone épaule du flanc.

A l'intérieur de chacune des surfaces élémentaires, on calcule la somme des distances entre les points appartenant au contour de l'image de la surface de référence, transformée à l'aide de la première fonction de transformation et compris dans ladite surface élémentaire, et les points du contour de l'image de la surface à inspecter les plus proches.

On recherche de manière itérative une seconde fonction de transformation, appliquée sur lesdits points dudit contour de la surface de référence et compris dans ladite surface élémentaire, de telle sorte que la valeur représentant ladite somme des distances, soit minimale.

Une alternative consiste à déterminer cette deuxième fonction de transformation affine locale à l'aide de la méthode dite des cartes de distances, telle que décrite par H.G. Barrow, J.M. Tenenbaum, R.C. Baum & H.C. Wolf dans l'article « Parametric correspondance and chamfer matching ; two techniques for image matching » in Proc. Int. Joint Conf. Artificial Intelligence 977, p. 659-663. L'intérêt de cet algorithme d'optimisation réside dans sa simplicité.

Il est également possible d'accroître la robustesse de la méthode en utilisant des cartes de distance orientées selon des directions données. La distance prise en compte correspond alors à la distance du point au contour le plus proche selon une direction donnée correspondant sensiblement à la direction du segment sur lequel se situe ce point, et telle que décrite par Clark F. Oison & Daniel P Huttenlocher dans l'article « Target Recognition by Matching Oriented Edge Pixels » IEEE, Transactions on Image Processing, Vol 6, N° 1 Janvier 1997. Cet artifice permet de fiabiliser les résultats obtenus en « filtrant » des contours peu pertinents pour le recalage localisé tels que les stries présentes à l'intérieur de certains motifs en relief.

Lorsque les paramètres de la seconde fonction de transformation locale ont été déterminés, on applique cette seconde fonction de transformation à l'ensemble des points de ladite portion de surface élémentaire de la surface de référence transformée à l'aide de la première fonction de transformation.

On obtient donc autant de seconde fonction de transformation que de portions de surface élémentaire. Chacun des points de la surface de référence est donc transformé une première fois à l'aide de la première fonction de transformation, et une seconde fois à l'aide de la seconde fonction de transformation correspondant à la surface élémentaire à laquelle il appartient.

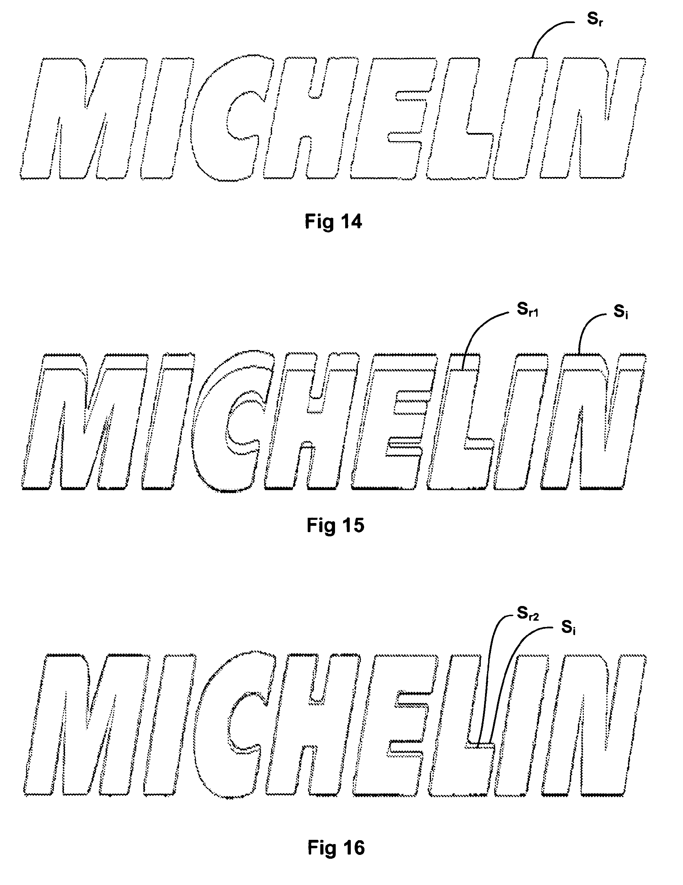

La figure 14 représente une vue des contours de la surface de référence $S_r$. La figure 15 représente une vue de l'image des contours de la surface de référence transformée à l'aide de la première fonction de transformation $S_{r1}$, superposée sur la vue des contours de l'image Si de la surface à inspecter. Enfin, la figure 16 illustre la superposition des contours de l'image de la surface de référence transformée successivement à l'aide de la première fonction de transformation et des secondes fonctions de transformation, $S_{r2}$, avec l'image $S_i$, des contours de la surface à inspecter. Les figures 14, 15 et 16 ont été dilatées pour les besoins de l'explication, de manière à faire apparaître les différences.

L'intérêt de l'utilisation de deux séries de fonctions de transformation, dont la première est appliquée à l'ensemble de la surface de référence, et les secondes sont appliquées selon une direction particulière ou de manière localisée à des surfaces élémentaires, réside dans le fait que, lorsque la première fonction affine a été déterminée, elle peut s'appliquer à l'ensemble des pneumatiques de la même dimension, et seules les secondes fonctions de transformation localisées doivent être recalculées pour chacun des pneumatiques à inspecter. Ceci a pour avantage de limiter les temps de calcul, et de simplifier les opérations de contrôle.

Un autre perfectionnement de la méthode concerne la mise en adéquation du modèle de référence avec les reliefs réels du moule utilisé pour effectuer l'opération de vulcanisation. Comme cela a été évoqué ans les paragraphes précédents, les données permettant de décrire la surface servant de référence sont préférentiellement issues des données de réalisation du moule de cuisson. Il est fréquent que le moule réel servant à vulcaniser le pneumatique fasse l'objet de modifications mineures pendant la durée de son exploitation. C'est le cas par exemple lorsque l'on perce des évents pour faciliter l'évacuation des gaz, ou encore lorsque l'on change les plaquettes amovibles portant les indications de la date à laquelle s'effectue la cuisson.

Pour réaliser cette mise en conformité, il est proposé d'utiliser un pneumatique considéré comme un pneumatique de référence et de déterminer le profil tridimensionnel de sa surface. On compare alors par superposition la surface de référence transformée selon les étapes décrites ci-dessus avec la surface du pneumatique de référence. Les différences entre ces deux surfaces sont présentées à un opérateur qualifié qui identifie ces évolutions.

Lorsque l'opérateur apprécie qu'une différence n'est pas le fruit d'une anomalie de fabrication, il a alors la possibilité de remplacer la portion de surface de référence correspondante, par les données provenant de la portion de surface du pneumatique de référence et comprenant l'évolution de marquage en relief en question. La surface de référence est ainsi modifiée et enrichie des évolutions réalisées sur le moule de fabrication. Cette référence enrichie sert alors de nouvelle référence pour l'inspection des pneumatiques suivants.

L'appréciation de la conformité de la surface à inspecter par rapport à la référence, ne fait pas l'objet de manière explicite de la présente invention, mais on observera que l'étape préparatoire qui consiste à mettre en oeuvre la méthode de recalage telle que décrite dans les paragraphes qui précèdent permet de rendre plus pertinente l'analyse des écarts entre la surface à inspecter et la surface de référence. En particulier, il en résulte une diminution importante du nombre de détection à tort, et une meilleure appréciation des anomalies de fabrication dans les parties de la surface ne comportant pas de reliefs.

La méthode divulguée par la présente description s'applique particulièrement bien aux zones du pneumatique situées dans les flancs qui comportent de nombreux marquages en relief formés de caractères alphanumériques facilement identifiable.

La mise en oeuvre de la méthode pour l'analyse de la conformité de la surface interne du pneumatique nécessite en conséquence quelques adaptations. En particulier, la recherche des points caractéristiques ne peut plus être basée sur la recherche de caractères alphanumériques et l'utilisation d'une méthode de recherche de type OCR. On s'arrange alors pour identifier des motifs particuliers, que l'on peut éventuellement créer à cet usage.

Il est aussi tout à fait possible d'envisager l'utilisation d'une méthode selon l'invention pour l'inspection de la bande de roulement. On observe néanmoins que les mouvements dus au montage et au gonflage sont de très faible amplitude dans cette partie du pneumatique. Il en résulte que les besoins de recalage des surfaces est de moindre ampleur et que, par voie de conséquence, les algorithmes de calcul peuvent être grandement simplifiés et se limiter à la seule recherche de la première fonction de transformation.

**Revendications**

1. Méthode d'inspection d'une partie de la surface d'un pneumatique par rapport à une surface de référence, lesdites surfaces comprenant des marquages en relief, dans laquelle

   - on détermine le profil tridimensionnel de la surface à inspecter,
   - on localise des points caractéristiques sur la surface à inspecter, et on apparie ces points avec les points caractéristiques correspondants issus des données tridimensionnelles de la surface de référence, de manière à créer un ensemble de couples de points caractéristiques appariés,
   - on recherche, de manière itérative, une première fonction de transformation appliquée sur les points caractéristiques de la surface de référence, de telle sorte que la valeur représentant la somme des distances entre chacun des points caractéristiques de la surface de référence, transformés à l'aide de ladite première fonction de transformation, et les points de la surface à inspecter qui leur sont appariés, soit minimale,

- on applique ladite première fonction de transformation à l'ensemble des points de la surface de référence pour obtenir une surface de référence transformée,

**caractérisée en ce que** la fonction de transformation est une fonction affine comprenant une homothétie dont le rapport a une valeur absolue différente de 1, de sorte qu'on apprécie la conformité de la zone à inspecter en comparant les données numériques décrivant la surface à inspecter avec les données numériques décrivant la surface de référence déformée de manière non isotrope à l'aide de la première fonction de transformation.

2. Méthode d'inspection selon la revendication 1, dans laquelle on détermine la localisation des points caractéristiques par reconnaissance optique des caractères alphanumériques et des textes ou des motifs en relief présents sur la surface à inspecter, en mettant en oeuvre les étapes suivantes :

- on segmente la surface pour obtenir une image en noir et blanc de la surface dans un plan,
- on associe à chaque caractère alphanumérique ou motif un tracé linéaire dont les branches représentent le squelette dudit caractère alphanumérique ou dudit motif,
- on calcule pour chaque caractère alphanumérique ou pour chaque motif une ou plusieurs valeurs numériques caractéristiques de sa géométrie, et on associe un caractère alphanumérique ou une série de caractère alphanumérique de l'image de la surface à inspecter, à un caractère ou à un texte de l'image de la surface de référence, ou un motif de l'image de la surface à inspecter à un motif de l'image de référence,
- on choisit comme point caractéristique un ou plusieurs points de chacun des caractères alphanumériques ou des motifs ainsi identifiés et associés.

3. Méthode d'inspection selon la revendication 2, dans laquelle les points caractéristiques d'un caractère alphanumérique ou d'un motif sont choisis parmi les points tels que l'intersection des branches du tracé linéaire associé au squelette des dits caractères ou desdits motifs, les points terminaux desdites branches, les coins d'un quadrilatère enveloppant le squelette du caractère alphanumérique ou du motif, ou un barycentre des points formant les lignes du caractère alphanumérique.

4. Méthode d'inspection selon l'une des revendications 1 à 3, dans laquelle, l'étape de sélection de ladite première fonction de transformation, est précédée d'une étape au cours de laquelle,

- on détermine le profil radial moyen de la surface de référence et le profil radial moyen de la surface à inspecter,
- on détermine la rotation et la translation à appliquer dans un plan radial au profil radial moyen de la surface de référence qui permet de faire coïncider ces deux profils et,
- on applique cette rotation et cette translation à l'ensemble des points de la surface de référence.

5. Méthode d'inspection selon l'une des revendications 1 à 4, dans laquelle, les coordonnées en trois dimensions (x, y, z) des données décrivant la surface de référence et la surface à inspecter sont exprimées selon des axes orthonormés OX, OY et OZ, et dans laquelle l'axe OZ correspond sensiblement à l'axe de rotation du pneumatique.

6. Méthode d'inspection selon la revendication 5 dans laquelle, on convertit les valeurs (x, y) dans le plan OXY, en coordonnées polaires (p, θ).

7. Méthode d'inspection selon la revendication 6 dans laquelle, l'étape de sélection de ladite première fonction de transformation, est précédée d'une étape au cours de laquelle,

- on recherche dans le sous ensemble des points appariés le ou les points caractéristiques situés sur des marquages en relief et n'apparaissant qu'une seule fois sur la partie de surface à inspecter, et
- on recale l'image de la surface de référence et l'image de la surface à inspecter en plaçant l'origine des valeurs angulaire (θ) et l'origine des valeurs radiales (p) de l'image de la surface de référence et de l'image de la surface à inspecter à la valeur angulaire et à la valeur radiale desdits points caractéristiques.

8. Méthode d'inspection selon l'une des revendications 1 à 7 dans laquelle, après avoir appliqué la première fonction de transformation à l'ensemble des points de la surface de référence :

- on constitue des sous ensemble de points caractéristiques appariés appartenant à une même zone ou portion de la surface de référence et de la surface à inspecter,
- on recherche, de manière itérative, une seconde fonction de transformation affine comprenant une homothétie dont le rapport a une valeur absolue différente de 1, appliquée sur les points caractéristiques de la zone considérée transformés à l'aide de ladite première fonction de transformation et appartenant à ladite zone, de telle sorte que la valeur représentant la somme des distances entre chacun des points caractéristiques de la zone considérée de la surface de référence, transformés à l'aide de ladite première fonction de transformation et de ladite seconde fonction de transformation et les points de la surface à inspecter qui leurs sont appariés, soit minimale,

- on applique ladite seconde fonction de transformation à l'ensemble des points de la surface de référence, transformés à l'aide de ladite première fonction de transformation, et appartenant à ladite zone.

9. Méthode d'inspection selon l'une des revendications 1 à 7 dans laquelle, après avoir appliqué la première fonction de transformation à l'ensemble des points de la surface de référence :

   - on détermine les contours de l'image de la surface de référence et de l'image de la surface à inspecter,
   - on découpe l'image de la surface de référence en surfaces élémentaires,
   - à l'intérieur de chacune des surfaces élémentaires on calcule la somme des distances entre les points du contour de l'image de la surface de référence transformés à l'aide de ladite première fonction de transformation et appartenant à ladite surface élémentaire, et les points du contour de l'image de la surface à inspecter le plus proche et,
   - on recherche de manière itérative une seconde fonction de transformation affine comprenant une homothétie dont le rapport a une valeur absolue différente de 1, appliquée sur lesdits points sélectionnés dudit contour de la surface de référence transformés à l'aide de ladite première fonction de transformation et appartenant à ladite surface élémentaire, de telle sorte que la valeur représentant ladite somme des distances, soit minimale.
   - on applique ladite seconde fonction de transformation à l'ensemble des points de la surface élémentaire de la surface de référence transformés à l'aide de ladite première fonction de transformation et appartenant à ladite surface élémentaire.

10. Méthode selon l'une des revendications précédentes dans laquelle les données tridimensionnelles de la surface de référence proviennent des données de réalisation du moule destiné à la cuisson des pneumatiques à inspecter.

11. Méthode d'inspection selon l'une des revendications précédentes dans laquelle on apprécie la conformité de la zone à inspecter en comparant les données numériques décrivant la surface à inspecter avec les données numériques décrivant la surface de référence transformées à l'aide de la première et des deuxièmes fonctions de transformation.

12. Méthode d'inspection selon l'une des revendications précédentes dans laquelle l'étape au cours de laquelle on détermine le profil tridimensionnel de la surface à inspecter est précédée d'une étape au cours de laquelle le pneumatique à inspecter est gonflé à une pression de référence.

13. Dispositif d'inspection de la surface d'un pneumatique comprenant des moyens permettant de déterminer le profil tridimensionnel de la surface à inspecter, des moyens de stockage des données numériques décrivant la surface de référence, et des moyens de calcul par ordinateur aptes à mettre en oeuvre les algorithmes de calcul comprenant les étapes dans lesquelles :

   - on détermine le profil tridimensionnel de la surface à inspecter,
   - on localise des points caractéristiques sur la surface à inspecter, et on apparie ces points avec les points caractéristiques correspondants issus des données tridimensionnelles d'une surface de référence, de manière à créer un ensemble de couples de points caractéristiques appariés,
   - on recherche, de manière itérative, une première fonction de transformation, appliquée sur les points caractéristiques de la surface de référence, de telle sorte que la valeur représentant la somme des distances entre chacun des points caractéristiques de la surface de référence transformés à l'aide de ladite première fonction de transformation et les points de la surface à inspecter qui leurs sont appariés, soit minimale,
   - on applique ladite première fonction de transformation à l'ensemble des points de la surface de référence pour obtenir une surface de référence transformée.

   **caractérisé en ce que** la fonction de transformation est une fonction affine comprenant une homothétie dont le rapport a une valeur absolue différente de 1, de sorte qu'on apprécie la conformité de la zone à inspecter en comparant les données numériques décrivant la surface à inspecter avec les données numériques décrivant la surface de référence déformée de manière non isotrope à l'aide de la première fonction de transformation.

**Claims**

1. Method for inspecting a portion of the surface of a tyre in relation to a reference surface, said surfaces comprising markings in relief, wherein

- the three-dimensional profile of the surface to be inspected is determined,
- characteristic points on the surface to be inspected are located and these points are matched with the corresponding characteristic points originating from the three-dimensional data of a reference surface, so as to create a set of pairs of matched characteristic points,
- in an iterative manner, a first transformation function is sought, applied to the characteristic points of the reference surface, so that the value representing the sum of the distances between each of the characteristic points of the reference surface, transformed with the aid of said first transformation function, and the points of the surface to be inspected that are matched with them, is minimal,
- said first transformation function is applied to all of the points of the reference surface in order to obtain a transformed reference surface,

**characterized in that** the transformation function is an affine function comprising a homothetic transformation the ratio of which has an absolute value that is different from 1, so that the conformity of the zone to be inspected is assessed by comparing the digital data describing the surface to be inspected with the digital data describing the reference surface deformed in a non-isotropic manner with the aid of the first transformation function.

2. Inspection method according to Claim 1, wherein the location of the characteristic points is determined by optical recognition of the alphanumeric characters and of the texts or of the patterns in relief that are present on the surface to be inspected, by applying the following steps:

- the surface is segmented to obtain a black-and-white image of the surface in a plane,
- each alphanumeric character or pattern is associated with a linear mark the branches of which represent the skeleton of said alphanumeric character or of said pattern,
- for each alphanumeric character or for each pattern, one or more numeric values characteristic of its geometry are calculated and an alphanumeric character or a series of alphanumeric characters of the image of the surface to be inspected is associated with a character or with a text of the image of the reference surface, or a pattern of the image of the surface to be inspected is associated with a pattern of the reference image,
- one or more points of each of the alphanumeric characters or of the patterns thus identified and associated is/are chosen as a characteristic point.

3. Inspection method according to Claim 2, wherein the characteristic points of an alphanumeric character or of a pattern are chosen from the points such as the intersection of the branches of the linear mark associated with the skeleton of said characters or of said patterns, the terminal points of said branches, the corners of a quadrilateral enveloping the skeleton of the alphanumeric character or of the pattern, or a barycentre of the points forming the lines of the alphanumeric character.

4. Inspection method according to one of Claims 1 to 3, wherein the step of selecting said first transformation function is preceded by a step during which,

- the mean radial profile of the reference surface and the mean radial profile of the surface to be inspected are determined,
- the rotation and the translation to be applied in a radial plane to the mean radial profile of the reference surface are determined so that it is possible to cause these two profiles to coincide and,
- this rotation and this translation are applied to all of the points of the reference surface.

5. Inspection method according to one of Claims 1 to 4, wherein the three-dimensional coordinates (x, y, z) of the data describing the reference surface and the surface to be inspected are expressed on three orthonormal axes OX, OY and OZ, and wherein the axis OZ corresponds substantially to the axis of rotation of the tyre.

6. Inspection method according to Claim 5, wherein the values (x, y) in the plane OXY are converted into polar coordinates (p, θ).

7. Inspection method according to Claim 6, wherein the step of selecting said first transformation function is preceded by a step during which,

- in the subset of the matched points, the characteristic point or points situated on markings in relief and appearing only once on the portion of surface to be inspected are sought, and
- the image of the reference surface and the image of the surface to be inspected are adjusted by placing the origin of the angular values (θ) and the origin of the radial values (p) of the image of the reference surface and of the image of the surface to be inspected at the angular value and at the radial value of said characteristic points.

8. Inspection method according to one of Claims 1 to 7, wherein, after having applied the first transformation function to all of the points of the reference surface:

- subsets of matched characteristic points belonging to one and the same zone or portion of the reference surface and of the surface to be inspected are formed,
- in an iterative manner, a second affine transformation function is sought comprising a homothetic transformation the ratio of which has an absolute value different from 1, applied to the characteristic points of the considered zone, said points being transformed with the aid of said first transformation function and belonging to the said zone, so that the value representing the sum of the distances between each of the characteristic points of the considered zone of the reference surface, transformed with the aid of said first transformation function and of said second transformation function and the points of the surface to be inspected that are matched with them, is minimal,
- said second transformation function is applied to all of the points of the reference surface, which points being transformed with the aid of said first transformation function, and belonging to said zone.

9. Inspection method according to one of Claims 1 to 7, wherein, after having applied the first transformation function to all of the points of the reference surface:

- the contours of the image of the reference surface and of the image of the surface to be inspected are determined,
- the image of the reference surface is divided into elementary surfaces,
- inside each of the elementary surfaces, the sum of the distances between the points of the contour of the image of the reference surface, said points being transformed with the aid of said first transformation function and belonging to said elementary surface, and the points of the closest contour of the image of the surface to be inspected, is calculated and,
- in an iterative manner, a second affine transformation function is sought comprising a homothetic transformation the ratio of which has an absolute value that is different from 1, applied to said selected points of said contour of the reference surface, transformed with the aid of said first transformation function and belonging to said elementary surface, so that the value representing said sum of the distances is minimal,
- said second transformation function is applied to all of the points of the elementary surface of the reference surface, transformed with the aid of said first transformation function and belonging to said elementary surface.

10. Method according to one of the preceding claims, wherein the three-dimensional data of the reference surface originate from the data for production of the mould intended for the curing of the tyres to be inspected.

11. Inspection method according to one of the preceding claims, wherein the conformity of the zone to be inspected is assessed by comparing the digital data describing the surface to be inspected with the digital data describing the reference surface, which data are transformed with the aid of the first and the second transformation functions.

12. Inspection method according to one of the preceding claims, wherein the step during which the three-dimensional profile of the surface to be inspected is determined is preceded by a step during which the tyre to be inspected is inflated to a reference pressure.

13. Device for inspecting the surface of a tyre comprising means making it possible to determine the three-dimensional profile of the surface to be inspected, means for storing the digital data describing the reference surface, and computerized calculation means capable of applying the calculation algorithms comprising the steps in which:

- the three-dimensional profile of the surface to be inspected is determined,
- the characteristic points are located on the surface to be inspected, and these points are matched with the corresponding characteristic points originating from the three-dimensional data of a reference surface so as to create a set of pairs of matched characteristic points,
- in an iterative manner, a first transformation function is sought, applied to the characteristic points of the reference surface, so that the value representing the sum of the distances between each of the characteristic points of the reference surface, which points are transformed with the aid of said first transformation function, and the points of the surface to be inspected that are matched with them, is minimal,
- said first transformation function is applied to all of the points of the reference surface in order to obtain a transformed reference surface,

**characterized in that** the transformation function is an affine function comprising a change of scale the ratio of which has an absolute value different from 1, so that the conformity of the zone to be inspected is assessed by comparing the digital data describing the surface to be inspected with the digital data describing the reference surface deformed in a non-isotropic manner with the aid of the first transformation function.

**Patentansprüche**

1.  Verfahren zur Prüfung eines Teils der Fläche eines Luftreifens im Vergleich mit einer Bezugsfläche, wobei die Flächen erhabene Markierungen enthalten, bei dem

    - das dreidimensionale Profil der zu prüfenden Fläche bestimmt wird,
    - charakteristische Punkte der zu prüfenden Fläche lokalisiert, und diese Punkte mit den entsprechenden charakteristischen Punkten gepaart werden, die von den dreidimensionalen Daten der Bezugsfläche stammen, um eine Einheit von Paaren gepaarter charakteristischer Punkte zu erzeugen,
    - auf iterative Weise eine erste Transformationsfunktion gesucht wird, die an die charakteristischen Punkte der Bezugsfläche derart angewendet wird, dass der die Summe der Abstände zwischen jedem der charakteristischen Punkte der Bezugsfläche, die mit Hilfe der ersten Transformationsfunktion transformiert wurden, und den Punkten der zu prüfenden Fläche, die mit ihnen gepaart sind, darstellende Wert minimal ist,
    - die erste Transformationsfunktion an die Gesamtheit der Punkte der Bezugsfläche angewendet wird, um eine transformierte Bezugsfläche zu erhalten,

    **dadurch gekennzeichnet, dass** die Transformationsfunktion eine affine Funktion ist, die eine Homothetie enthält, deren Verhältnis einen Absolutwert anders als 1 hat, so dass die Konformität der zu prüfenden Zone bewertet wird, indem die die zu prüfende Fläche beschreibenden numerischen Daten mit den numerischen Daten verglichen werden, die die mit Hilfe der ersten Transformationsfunktion auf nicht isotrope Weise verformte Bezugsfläche beschreiben.

2.  Prüfverfahren nach Anspruch 1, bei dem die Lokalisierung der charakteristischen Punkte durch optische Erkennung der alphanumerischen Zeichen und der Texte oder der erhabenen Muster auf der zu prüfenden Fläche bestimmt wird, indem die folgenden Schritte durchgeführt werden:

    - die Fläche wird segmentiert, um ein Schwarzweißbild der Fläche in einer Ebene zu erhalten,
    - jedem alphanumerischen Zeichen oder Muster wird ein linearer Verlauf zugeordnet, dessen Zweige das Skelett des alphanumerischen Zeichens oder des Musters darstellen,
    - für jedes alphanumerische Zeichen oder für jedes Muster werden ein oder zwei für seine Geometrie charakteristische numerische Werte berechnet, und es wird ein alphanumerisches Zeichen oder eine Reihe von alphanumerischen Zeichen des Bilds der zu prüfenden Fläche einem Zeichen oder einem Text des Bilds der Bezugsfläche, oder ein Muster des Bilds der zu prüfenden Fläche einem Muster des Bezugsbilds zugeordnet,
    - als charakteristischer Punkt wird ein oder werden mehrere Punkte jedes der so identifizierten und zugeordneten alphanumerischen Zeichen oder Muster gewählt.

3.  Prüfverfahren nach Anspruch 2, bei dem die charakteristischen Punkte eines alphanumerischen Zeichens oder eines Musters aus den Punkten wie dem Schnittpunkt der Zweige des dem Skelett der Zeichen oder der Muster zugeordneten linearen Verlaufs, den Endpunkten der Zweige, den Ecken eines Vierecks, das das Skelett des alphanumerischen Zeichens oder des Musters umgibt, oder einem Baryzentrum der Punkte ausgewählt werden, die die Linien des alphanumerischen Zeichens formen.

4.  Prüfverfahren nach einem der Ansprüche 1 bis 3, bei dem vor dem Auswahlschritt der ersten Transformationsfunktion ein Schritt liegt, während dem

    - das mittlere radiale Profil der Bezugsfläche und das mittlere radiale Profil der zu prüfenden Fläche bestimmt werden,
    - die Drehung und die Translationsverschiebung bestimmt werden, die in einer radialen Ebene an das mittlere radiale Profil der Bezugsfläche anzuwenden sind, was es ermöglicht, diese zwei Profile zusammenfallen zu lassen, und
    - diese Drehung und diese Translationsverschiebung an die Gesamtheit der Punkte der Bezugsfläche angewendet werden.

5.  Prüfverfahren nach einem der Ansprüche 1 bis 4, bei dem die dreidimensionalen Koordinaten (x, y, z) der die Bezugsfläche und die zu prüfende Fläche beschreibenden Daten gemäß orthonormierten Achsen OX, OY und OZ ausgedrückt werden, und bei dem die Achse OZ im Wesentlichen der Drehachse des Luftreifens entspricht.

6.  Prüfverfahren nach Anspruch 5, bei dem die Werte (x, y) in der Ebene OXY in Polarkoordinaten (p, θ) umgewandelt werden.

**7.** Prüfverfahren nach Anspruch 6, bei dem vor dem Schritt der Auswahl der ersten Transformationsfunktion ein Schritt liegt, während dem

- in der Untereinheit der gepaarten Punkte der oder die charakteristischen Punkte gesucht werden, die sich auf erhabenen Markierungen befinden und nur einmal in dem Bereich der zu prüfenden Fläche erscheinen, und
- das Bild der Bezugsfläche und das Bild der zu prüfenden Fläche neu eingestellt werden, indem der Ursprung der Winkelwerte (θ) und der Ursprung der radialen Werte (p) des Bilds der Bezugsfläche und des Bilds der zu prüfenden Fläche auf den Winkelwert und auf den radialen Wert der charakteristischen Punkte gesetzt werden.

**8.** Prüfverfahren nach einem der Ansprüche 1 bis 7, bei dem nach dem Anwenden der ersten Transformationsfunktion an die Gesamtheit der Punkte der Bezugsfläche:

- Untereinheiten von gepaarten charakteristischen Punkten gebildet werden, die zur gleichen Zone oder zum gleichen Teil der Bezugsfläche und der zu prüfenden Fläche gehören,
- iterativ eine zweite affine Transformationsfunktion gesucht wird, die eine Homothetie enthält, deren Verhältnis einen Absolutwert anders als 1 hat, angewendet an die charakteristischen Punkte der betrachteten Zone, die mit Hilfe der ersten Transformationsfunktion transformiert wurden und zu der Zone gehören, so dass der die Summe der Abstände zwischen jedem der charakteristischen Punkte der betrachteten Zone der Bezugsfläche, die mit Hilfe der ersten Transformationsfunktion und der zweiten Transformationsfunktion transformiert wurden, und den Punkten der zu prüfenden Fläche, die mit ihnen gepaart sind, darstellende Wert minimal ist,
- die zweite Transformationsfunktion an die Gesamtheit der Punkte der Bezugsfläche angewendet wird, die mit Hilfe der ersten Transformationsfunktion transformiert wurden und zu der Zone gehören.

**9.** Prüfverfahren nach einem der Ansprüche 1 bis 7, bei dem nach dem Anwenden der ersten Transformationsfunktion an die Gesamtheit der Punkte der Bezugsfläche:

- die Umrisse des Bilds der Bezugsfläche und des Bilds der zu prüfenden Fläche bestimmt werden,
- das Bild der Bezugsfläche in Elementarflächen zerschnitten wird,

- im Inneren jeder der Elementarflächen die Summe der Abstände zwischen den Punkten des Umrisses des Bilds der Bezugsfläche, die mit Hilfe der ersten Transformationsfunktion transformiert wurden und zur Elementarfläche gehören, und den Punkten des am nächsten liegenden Umrisses des Bilds der zu prüfenden Fläche berechnet wird,
und
- iterativ eine zweite affine Transformationsfunktion gesucht wird, die eine Homothetie enthält, deren Verhältnis einen Absolutwert anders als 1 hat, angewendet an die ausgewählten Punkte des Umrisses der Bezugsfläche, die mit Hilfe der ersten Transformationsfunktion transformiert wurden und zur Elementarfläche gehören, so dass der die Summe der Abstände darstellende Wert minimal ist,
- die zweite Transformationsfunktion an die Gesamtheit der Punkte der Elementarfläche der Bezugsfläche angewendet wird, die mit Hilfe der ersten Transformationsfunktion transformiert wurden und zur Elementarfläche gehören.

**10.** Verfahren nach einem der vorhergehenden Ansprüche, bei dem die dreidimensionalen Daten der Bezugsfläche von den Herstellungsdaten des Formwerkzeugs kommen, das für das Brennen der zu prüfenden Luftreifen bestimmt ist.

**11.** Prüfverfahren nach einem der vorhergehenden Ansprüche, bei dem die Konformität der zu prüfenden Zone bewertet wird, indem die die zu prüfende Fläche beschreibenden numerischen Daten mit den die Bezugsfläche beschreibenden numerischen Daten verglichen werden, die mit Hilfe der ersten und der zweiten Transformationsfunktion transformiert wurden.

**12.** Prüfverfahren nach einem der vorhergehenden Ansprüche, bei dem vor dem Schritt, während dem das dreidimensionale Profil der zu prüfenden Fläche bestimmt wird, ein Schritt liegt, während dem der zu prüfende Luftreifen auf einen Bezugsdruck aufgepumpt wird.

**13.** Vorrichtung zur Prüfung der Fläche eines Luftreifens, die Einrichtungen, welche die Bestimmung des dreidimensionalen Profils der zu prüfenden Fläche ermöglichen, Einrichtungen zum Speichern der die Bezugsfläche beschreibenden numerischen Daten und Einrichtungen zur Computerberechnung enthält, die die Rechenalgorithmen durchführen können, die die Schritte enthalten, in denen:

- das dreidimensionale Profil der zu prüfenden Fläche bestimmt wird,
- charakteristische Punkte auf der zu prüfenden Fläche lokalisiert werden, und diese Punkte mit den entsprechenden charakteristischen Punkten gepaart werden, die von den dreidimensionalen Daten einer Bezugsfläche stammen, um eine Einheit von Paaren gepaarter charakteristischer Punkte zu erzeugen,

- iterativ eine erste Transformationsfunktion gesucht wird, die an die charakteristischen Punkte der Bezugsfläche angewendet wird, so dass der die Summe der Abstände zwischen jedem der charakteristischen Punkte der Bezugsfläche, die mit Hilfe der ersten Transformationsfunktion transformiert wurden, und den Punkten der zu prüfenden Fläche, die mit ihnen gepaart sind, darstellende Wert minimal ist,

- die erste Transformationsfunktion an die Gesamtheit der Punkte der Bezugsfläche angewendet wird, um eine transformierte Bezugsfläche zu erhalten,

**dadurch gekennzeichnet, dass** die Transformationsfunktion eine affine Funktion ist, die eine Homothetie enthält, deren Verhältnis einen Absolutwert anders als 1 hat, so dass die Konformität der zu prüfenden Zone bewertet wird, indem die die zu prüfende Fläche beschreibenden numerischen Daten mit den numerischen Daten verglichen werden, die die mit Hilfe der ersten Transformationsfunktion auf nicht isotrope Weise verformte Bezugsfläche beschreiben.

**Fig 1**

**Fig 2**

Fig 3

Fig 4

Fig 5

Fig 6

Fig 7

Fig 8

Δα

Fig 9

EP 2 235 679 B1

**Fig 10**

**Fig 11**

**Fig 12**

**Fig 13**

Fig 14

Fig 15

Fig 16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5715166 A

- EP 1750089 A

**Littérature non-brevet citée dans la description**

- **BEN K. JANG ; ROLAND T. CHIN.** One-Pass Parallel Thinning ; Analysis, Properties and Quantitative Evaluation. *PAMI,* Novembre 1992, vol. 14 (11
- **H.G. BARROW ; J.M. TENENBAUM ; R.C. BAUM ; H.C. WOLF.** Parametric correspondance and chamfer matching ; two techniques for image matching. *Proc. Int. Joint Conf. Artificial Intelligence,* vol. 977, 659-663

- **CLARK F. OISON ; DANIEL P HUTTENLOCHER.** Target Recognition by Matching Oriented Edge Pixels. *IEEE, Transactions on Image Processing,* Janvier 1997, vol. 6 (1